# EUROPÄISCHE PATENTSCHRIFT

(11) **EP 3 513 396 B1**
(45) Veröffentlichungstag und Bekanntmachung des Hinweises auf die Patenterteilung: **17.06.2020**
(21) Anmeldenummer: 17761441.9
(22) Anmeldetag: 30.08.2017
(51) Int. Cl.: G08C 17/00

(54) **VERFAHREN ZUM FERNSTEUERN EINES KRAFTFAHRZEUGS MITTELS EINES MOBILEN STEUERGERÄTS UND FERNSTEURSYSTEM**
METHOD FOR THE REMOTE CONTROL OF A MOTOR VEHICLE BY MEANS OF A MOBILE CONTROLLER, AND REMOTE CONTROL SYSTEM
PROCÉDÉ DE COMMANDE À DISTANCE D'UN VÉHICULE À MOTEUR AU MOYEN D'UN DISPOSITIF DE COMMANDE MOBILE ET SYSTÈME DE COMMANDE À DISTANCE

(30) Priorität: 14.09.2016 DE 102016011071
(43) Veröffentlichungstag der Anmeldung: 24.07.2019
(73) Patentinhaber: Daimler AG, 70372 Stuttgart (DE)
(72) Erfinder: HUG, Tobias, 70197 Stuttgart (DE)
(74) Vertreter: JENSEN & SON
(86) Internationale Anmeldenummer: PCT/EP2017/001030
(87) Internationale Veröffentlichungsnummer: WO 2018/050269

(56) Entgegenhaltungen:
- DE-A1-102013 010 819
- US-A1- 2016 224 025

## Beschreibung

Die Erfindung betrifft ein Verfahren gemäß dem Oberbegriff von Patentanspruch 1 zum Fernsteuern zumindest einer Funktion eines Kraftfahrzeugs mittels eines mobilen Steuergeräts und weiterhin ein Fernsteuersystem gemäß dem Oberbegriff von Patentanspruch 7.

Aus der DE 10 2013 010 819 A1 sind ein Verfahren und eine Vorrichtung zur Fernsteuerung einer Funktion eines Fahrzeugs bekannt. Bei dem Verfahren wird mittels einer in einer mobilen Steuereinheit integrierten Signalempfangseinheit ein am Fahrzeug erzeugtes optisches oder akustisches Signal erfasst. Die Fernsteuerung wird ausschließlich dann freigegeben, wenn dieses Signal tatsächlich erfasst wird. Zusätzlich kann auch von der mobilen Steuereinheit ein Berechtigungssignal an das Fahrzeug übertragen werden, wobei die Fernsteuerung ausschließlich dann freigegeben wird, wenn das Berechtigungssignal vom Fahrzeug erfasst und als gültig erkannt wird. Weiterhin können mittels einer Kamera der Steuereinheit Bilder des Fahrzeugs erfasst werden, welche mittels einer in der Steuereinheit integrierten optischen Anzeigeeinheit ausgegeben werden.

Aus der US 2016/0224025 A1 ist ein Verfahren zur Fernsteuerung eines Einparkvorgangs eines Fahrzeugs mittels einer mobilen Steuereinheit bekannt, wobei mittels einer Kamera der mobilen Steuereinheit geprüft wird, ob die mobile Steuereinheit sich im Sichtbereich des Fahrzeugs befindet und wobei der Einparkvorgang nur durchgeführt wird, wenn und solange die mobile Steuereinheit sich im Sichtbereich des Fahrzeugs befindet.

Aufgabe der vorliegenden Erfindung ist es, ein Verfahren zum Fernsteuern eines Kraftfahrzeugs sowie ein Fernsteuersystem mit einem fernsteuerbaren Kraftfahrzeug und einem mobilen Steuergerät bereitzustellen, welche eine besonders sichere Fernsteuerung gewährleisten.

Diese Aufgabe wird erfindungsgemäß durch ein Verfahren mit den Merkmalen des Patentanspruchs 1 und ein Fernsteuersystem mit den Merkmalen des Patentanspruchs 6 gelöst. Vorteilhafte Ausgestaltungen und Weiterbildungen der Erfindung sind in den abhängigen Patentansprüchen angegeben.

Bei einem erfindungsgemäßen Verfahren zum Fernsteuern zumindest einer Funktion eines Kraftfahrzeugs mittels eines mobilen Steuergeräts wird mittels des mobilen Steuergeräts ein Fernsteuerbefehl an das Kraftfahrzeug gesendet, welcher von dem Kraftfahrzeug ausgeführt wird, wenn eine Freigabe erteilt wurde. Um eine besonders sichere Fernsteuerung zu gewährleisten, ist es erfindungsgemäß vorgesehen, dass ein mittels einer optischen Erfassungseinrichtung des mobilen Steuergeräts erfasstes Bild des Kraftfahrzeugs an das Kraftfahrzeug übermittelt wird und die Freigabe dann von einer Prüfeinrichtung des Kraftfahrzeugs erteilt wird, wenn das Kraftfahrzeug in dem Bild von der Prüfeinrichtung identifiziert wurde.

Zum Senden oder Übermitteln des Fernsteuerbefehls und des Bildes wird zwischen dem mobilen Steuergerät und dem Kraftfahrzeug eine Datenverbindung aufgebaut. Dabei kann es sich beispielsweise um eine Funkverbindung oder eine sonstige, bevorzugt kabellose, Verbindung handeln. Beispielsweise Weise kann hier das mobile Steuergerät oder das Kraftfahrzeug als WLAN -Hotspot agieren oder es kann ein Ad-hoc-Netz aufgebaut werden. Sowohl das mobile Steuergerät als auch das Kraftfahrzeug weisen dafür entsprechende Sende- und Empfangseinrichtungen auf. Das mobile Steuergerät kann ein dediziertes elektronisches Gerät, das heißt also eine Fernsteuerung, sein, es ist aber auch denkbar, ein mobiles Endgerät wie beispielsweise ein Mobiltelefon (Smartphone) oder etwa einen tragbaren Computer (Tablet) als mobiles Steuergerät zu verwenden.

Die Prüfeinrichtung des Kraftfahrzeugs kann eine elektronische Schaltung, einen Computer und/oder eine Softwarekomponente umfassen, welche mit der Empfangseinrichtung des Kraftfahrzeugs verbunden ist und welche zur Identifizierung des Kraftfahrzeugs in dem Bild eine Bildverarbeitung und/oder -auswertung selbsttätig durchführen kann. Die Freigabe kann beispielsweise eine Steueranweisung oder ein Signal sein, welche bzw. welches an eine Steuereinrichtung des Kraftfahrzeugs übermittelt wird, die zur Durchführung oder Ausführung des Fernsteuerbefehls eingerichtet ist.

Das erfindungsgemäße Verfahren ermöglicht vorteilhaft eine einfache, komfortable und sichere Überwachung des Fernsteuerns, da zur Erfassung oder Aufnahme des Bildes das mobile Steuergerät sehr einfach von der jeweiligen Bedienperson auf das Kraftfahrzeug gerichtet werden kann und damit gleichzeitig sichergestellt ist, dass das Kraftfahrzeug sich auch im Blickfeld der Bedienperson befindet. Dadurch findet die Durchführung oder Ausführung des jeweiligen Fernsteuerbefehls vorteilhaft stets unter Aufsicht oder Beobachtung der Bedienperson statt. Zudem ist damit vorteilhaft eine Ausführung eines versehentlich oder unbeabsichtigt erteilten Fernsteuerbefehls mit hinreichender Sicherheit ausgeschlossen.

Fernsteuerbare Funktionen des Kraftfahrzeugs können sehr vielfältig sein und beispielsweise ein Betätigen elektronischer oder elektrischer beziehungsweise elektrisch betriebener Einrichtungen des Kraftfahrzeugs umfassen. Insbesondere ist es jedoch vorgesehen, dass eine Bewegung, ein Manöver oder ein Fahrmanöver des Kraftfahrzeugs ferngesteuert veranlasst und/oder kontrolliert oder gesteuert werden kann. Dadurch kann beispielsweise das Kraftfahrzeug in eine Parklücke oder Position bewegt oder manövriert werden, welche einen so schmalen Freiraum bietet, dass ein komfortables Aus- oder Einsteigen nicht möglich ist. Ein Bewegen des Kraftfahrzeugs kann vorteilhaft zudem komfortabler und sicherer geschehen, da aufgrund der Position der Bedienperson außerhalb des Kraftfahrzeugs diese eine bessere Übersicht über die Situation haben und gegebenenfalls ihren Standort und damit auch ihre Perspektive einfacher und umfangreicher verändern oder wechseln kann als die einem Fahrzeuginsassen möglich ist.

In weiterer Ausgestaltung des erfindungsgemäßen Verfahrens ist es vorgesehen, dass ein Video des Kraftfahrzeugs mittels der optischen Erfassungseinrichtung des mobilen Steuergeräts aufgenommen wird, welches an das Kraftfahrzeug übermittelt wird. Die Freigabe zur Durchführung oder Ausführung des Fernsteuerbefehls wird dabei kontinuierlich erteilt, solange das Kraftfahrzeug in dem Video kontinuierlich von der Prüfeinrichtung identifiziert wird. Mit anderen Worten wird also nicht nur ein Einzelbild des Kraftfahrzeugs erfasst und übermittelt, sondern ein Videosignal oder Videostrom. Als Video kann hier auch eine Bildsequenz oder eine Sequenz von Einzelbildern gelten. Dies ermöglicht vorteilhaft eine kontinuierliche und zeitnahe Überwachung oder Überprüfung, ob sich das Kraftfahrzeug während des Fernsteuervorgangs im Blickfeld des mobilen Steuergeräts und damit implizit auch im Blickfeld der Bedienperson befindet. Weiterhin kann so besonders vorteilhaft besonders zeitnah und schnell reagiert werden, wenn sich das Kraftfahrzeug nicht mehr im Erfassungsbereich des mobilen Steuergeräts beziehungsweise der optischen Erfassungseinrichtung des mobilen Steuergeräts befindet. Zur Identifizierung des Kraftfahrzeugs können beispielsweise Objekterkennungs- und/oder Objektverfolgungsalgorithmen (Tracking) verwendet werden.

Wenn das Kraftfahrzeug nicht oder nicht mehr in dem von dem mobilen Steuergerät übermittelten Bild oder Video identifiziert werden kann, wird die Ausführung des Fernsteuerbefehls beziehungsweise die Ausführung oder eine Weiterführung beispielsweise eines vorbereiteten oder begonnenen Fahrmanövers unterbrochen oder abgebrochen. Es kann auch vorgesehen sein, dass in diesem Fall eine entsprechende Abbruchmeldung an die Bedienperson ausgegeben wird. Beispielsweise kann eine solche Abbruchmeldung von dem Kraftfahrzeug an das mobile Steuergerät übermittelt und dort auf einer Anzeigefläche angezeigt werden. Es ist aber beispielsweise zusätzlich oder alternativ auch eine akustische Signalisierung des Abbruchs denkbar.

In weiterer Ausgestaltung des erfindungsgemäßen Verfahrens ist es vorgesehen, dass von der Prüfeinrichtung eine Plausibilitätsprüfung des Fernsteuerbefehls durchgeführt und die Freigabe nur dann erteilt wird, wenn der Fernsteuerbefehl als plausibel bewertet wurde. Hierdurch wird vorteilhaft eine zusätzliche Erhöhung der Sicherheit des Fernsteuervorgangs erreicht. Mittels der Plausibilitätsprüfung oder Plausibilitätskontrolle oder Plausibilisierung können offensichtliche oder einfach erkennbare Unstimmigkeiten, Unrichtigkeiten, Fehler, Probleme und/oder Gefahren des Fernsteuerbefehls oder einer Ausführung des Fernsteuerbefehls mit geringem Aufwand erkannt oder ermittelt werden. Dazu können auch Informationen über einen Zustand, eine Situation, eine Position und/oder eine Umgebung des Kraftfahrzeugs berücksichtigt oder verarbeitet werden, welche beispielsweise von entsprechenden Sensoren oder Assistenzsystemen des Kraftfahrzeugs bereitgestellt werden können.

Unplausibel wäre zum Beispiel ein Fernsteuerbefehl, welcher offensichtlich zu einer Kollision mit einem in der Umgebung des Kraftfahrzeugs erkannten oder erfassten Objekt oder Hindernis führen würde. Eine Plausibilitätsprüfung oder Plausibilitätskontrolle kann sowohl in Hardware als auch in Software ausgeführt oder realisiert sein. Es kann dabei beispielsweise eine Überwachung von Signalen oder Befehlen vorgesehen sein, die nur in bestimmten Kombinationen oder Reihen Folgen auftreten dürfen. Auch können Werte, Größen oder entsprechende Bereiche und deren zeitlicher Verlauf geprüft werden. Beispielsweise kann ein Fernsteuerbefehl dann als unplausibel bewertet werden, wenn seine Ausführung dazu führen würde, dass eine bestimmte Größe, beispielsweise eine Geschwindigkeit des Kraftfahrzeugs, einen Wert außerhalb eines gesetzlich erlaubten Bereiches annehmen würde, wozu beispielsweise ein aktueller Standort des Kraftfahrzeugs, beispielsweise innerhalb einer geschlossenen Ortschaft, ausgewertet und berücksichtigt werden kann. Auch Fernsteuerbefehle, die in einer jeweiligen Situation oder in einem jeweiligen Zustand des Kraftfahrzeugs zu einer Beschädigung des Kraftfahrzeugs führen könnten oder nicht einem bestimmungsgemäßen Betrieb des Kraftfahrzeugs entsprechen, können als unplausibel bewertet werden. Ein Beispiel könnte hier ein Befehl zum Einlegen eines Rückwärtsgangs sein, während sich das Kraftfahrzeug wenigstens mit einer vorgegebenen Mindestgeschwindigkeit in Vorwärtsrichtung bewegt. Allgemein kann für die Plausibilisierung eine Mehrzahl von Regeln herstellerseitig definiert und vorgegeben sein. Die Plausibilitätsprüfung kann hier auch eine Validierung umfassen oder sein.

In weiterer Ausgestaltung des erfindungsgemäßen Verfahrens ist es vorgesehen, dass durch das Kraftfahrzeug die Ausführung des Fernsteuerbefehls abgebrochen und das Kraftfahrzeug in einen gegen unbeabsichtigte Bewegungen des Kraftfahrzeugs gesicherten Zustand versetzt wird, wenn ein Kommunikationsproblem zwischen dem mobilen Steuergerät und dem Kraftfahrzeug erkannt wird. Es wird durch das Kraftfahrzeug in einem solchen Fall also selbsttätig eine Fahrzeugsicherung initiiert, wodurch verhindert wird, dass durch das Kommunikationsproblem beispielsweise unbeabsichtigte und/oder unbeaufsichtigte Bewegungen oder Funktionen durchgeführt oder ausgelöst werden. Hierdurch kann gegebenenfalls auch eine Beschädigung des Kraftfahrzeugs oder anderer Objekte oder auch eine Beeinträchtigung eines umgebenden Verkehrsgeschehens vermieden oder minimiert werden. Kommunikationsprobleme, die zum Abbruch der Befehlsausführung führen, können beispielsweise eine über einem vorgegebenen Grenzwert liegende Latenz der Datenverbindung zwischen dem mobilen Steuergerät und dem Kraftfahrzeug oder etwa eine zu geringe Datenrate oder eine Unterbrechung dieser Datenverbindung sein.

Beim erfindungsgemäßen Verfahren ist es vorgesehen, dass das von der optischen Erfassungseinrichtung des mobilen Steuergeräts erfasste Bild oder ein entsprechendes Video des Kraftfahrzeugs mittels einer Anzeigeeinrichtung des mobilen Steuergeräts dargestellt wird. In dieser Darstellung wird dabei angezeigt, ob das Kraftfahrzeug durch die Prüfeinrichtung erfolgreich identifiziert wurde. Beispielsweise kann eine erfolgreiche Identifizierung durch einen farbigen, beispielsweise grünen,

Rahmen um das Kraftfahrzeug und eine fehlerhafte oder unvollständige Identifizierung oder Erkennung durch einen andersfarbigen, beispielsweise roten, Rahmen um das Kraftfahrzeug angezeigt oder visualisiert werden. Alternativ oder zusätzlich sind selbstverständlich auch weitere beliebige Markierungen, Hinweise oder dergleichen denkbar. Es können beispielsweise auch Techniken oder Maßnahmen der erweiterten Realität (englisch "augmented reality") eingesetzt werden. Vorteilhaft wird durch die besagte Darstellung und Anzeige der Bedienperson eine besonders einfach und intuitiv sowie schnell und sicher zu erkennende Rückmeldung über einen jeweiligen Erkennungs- oder Identifikationsstatus gegeben, sodass eine zuverlässige und gezielte Fernsteuerung des Kraftfahrzeugs ermöglicht oder erleichtert wird.
In weiterer Ausgestaltung des erfindungsgemäßen Verfahrens ist es vorgesehen, dass von dem mobilen Steuergerät eine Plausibilitätsprüfung des Fernsteuerbefehls durchgeführt, ein Ergebnis dieser Plausibilitätsprüfung an das Kraftfahrzeug gesendet und die Freigabe nur dann erteilt wird, wenn der Fernsteuerbefehl von dem mobilen Steuergerät als plausibel bewertet wurde. Die Plausibilitätsprüfung auf Seiten des mobilen Steuergeräts kann zusätzlich oder alternativ zu einer Plausibilitätsprüfung auf Seiten des Kraftfahrzeugs vorgesehen sein und bietet gleiche oder entsprechende Vorteile.

Ein erfindungsgemäßes Fernsteuersystem umfasst ein Kraftfahrzeug und ein mobiles Steuergerät, welche miteinander über eine Datenverbindung kommunizieren können. Um eine besonders sichere Fernsteuerung des Kraftfahrzeugs mittels des mobilen Steuergeräts zu gewährleisten, ist es erfindungsgemäß vorgesehen, dass das Fernsteuersystem zum Durchführen des erfindungsgemäßen Verfahrens eingerichtet ist.

Die bisher und im Folgenden sowie in den Patentansprüchen beschriebenen funktionalen Ausbildungen des erfindungsgemäßen Verfahrens sowie die entsprechenden Vorteile sind entsprechend sinngemäß auch auf das erfindungsgemäße Fernsteuersystem und zur Durchführung des Verfahrens verwendete Einrichtungen und Bauteile übertragbar und umgekehrt.

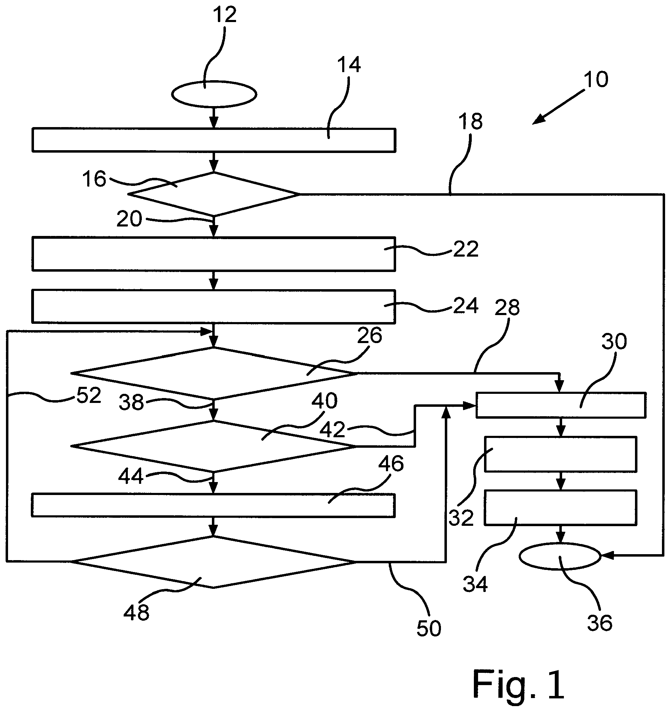

Weitere Vorteile, Merkmale und Einzelheiten der Erfindung ergeben sich aus der nachfolgenden Beschreibung eines bevorzugten Ausführungsbeispiels sowie anhand der Zeichnung.

Dabei zeigt die einzige Fig. eine schematische Darstellung eines Ablaufplans einer Ausführungsform des erfindungsgemäßen Verfahrens.

Die einzige Fig. Zeigt schematisch einen Ablaufplan 10 eines Verfahrens zum Fernsteuern zumindest einer Funktion eines Kraftfahrzeugs mittels eines mobilen Steuergeräts. Bei einem Start 12 des Verfahrens sind oder werden das mobile Steuergerät einerseits und das Kraftfahrzeug oder zumindest eine Empfangseinrichtung des Kraftfahrzeugs zum Empfang von von dem mobilen Steuergerät gesendeten Signalen andererseits aktiviert oder eingeschaltet. Dies kann beispielsweise auch ein Starten einer Softwareapplikation auf dem mobilen Steuergerät umfassen. Anschließend findet ein Verbindungsaufbau 14 zwischen dem mobilen Steuergerät und dem Kraftfahrzeug statt, wodurch also eine Verbindung etabliert wird oder werden soll, welche eine Kommunikation und Datenübertragung zwischen dem mobilen Steuergerät und dem Kraftfahrzeug ermöglicht. Diese, bevorzugt kabellose, Verbindung wird durch eine Verbindungsprüfung 16 geprüft und/oder bewertet. Hierbei kann beispielsweise überprüft werden, ob die Verbindung erfolgreich aufgebaut werde konnte, ob eine Latenz der Verbindung unterhalb eines vorgegebenen Grenzwertes und/oder ob eine Signalstärke und/oder eine mögliche oder erreichbare Datenübertragungsrate der Verbindung oberhalb eines jeweiligen vorgegebenen Grenzwertes liegt oder liegen.

Fällt die Verbindungsprüfung 16 negativ aus, das heißt erfüllt die Verbindung nicht die notwendigen oder vorgegebenen Voraussetzungen für eine Kommunikation und Datenübertragung oder konnte keine Verbindung etabliert werden, so folgt das Verfahren einem Pfad 18, welcher zu einem Ende 36 des Verfahrens führt. Damit ist das Verfahren in diesem Fall also beendet, bis beispielsweise ein erneuter Versuch stattfindet, eine Verbindung herzustellen. Liefert die Verbindungsprüfung 16 ein positives Ergebnis, das heißt erfüllt die Verbindung die notwendigen oder vorgegebenen Voraussetzungen, so folgt das Verfahren einem Pfad 20.

Anschließend ist es vorgesehen, dass von einer Bedienperson auf oder an dem mobilen Steuergerät eine Aktion, ein Manöver oder ein Fernsteuerbefehl ausgewählt oder eingegeben wird. Bevorzugt ist diese Auswahl oder Eingabe von der Bedienperson explizit zu bestätigen. Daraufhin erfolgt eine Übermittlung 22 eines die Auswahl oder Eingabe repräsentierenden oder kodierenden Fernsteuerbefehls von dem mobilen Steuergerät über die Datenverbindung zu dem oder an das Kraftfahrzeug. Gleichzeitig oder anschließend ist es vorgesehen, dass das Kraftfahrzeug mittels einer optischen Erfassungseinrichtung - beispielsweise einer Kamera - des mobilen Steuergeräts erfasst wird. Dabei kann bevorzugt in Echtzeit ein das Kraftfahrzeug erfassendes oder darstellendes Video oder Videosignal aufgenommen oder generiert werden. Dieses Video kann bevorzugt auch auf einer Anzeigefläche oder mittels einer Anzeigeeinrichtung des mobilen Steuergeräts der Bedienperson dargestellt oder angezeigt werden. Bevorzugt ebenfalls in Echtzeit erfolgt ein Senden 24 des Videos oder des Videosignals von dem mobilen Steuergerät an das Kraftfahrzeug.

In beziehungsweise von dem Kraftfahrzeug wird dann eine Gültigkeitsprüfung 26 der über die Datenverbindung von dem mobilen Steuergerät gesendeten und von der Empfangseinrichtung des Kraftfahrzeugs empfangenen Daten und/oder Signale durchgeführt. Fällt diese Gültigkeitsprüfung 26 negativ aus, das heißt erweisen sich die empfangenen Daten gemessen oder bewertet an vorgegebenen zu Erfüllenden Eigenschaften oder Bedingungen vollständig oder teilweise als ungültig, so folgt das Verfahren einem Pfad 28, welcher zu einem Manöverabbruch 30 führt. Eine entsprechende Abbruchmeldung wird von dem Kraftfahrzeug an das mobile Steuergerät übertragen und dort wird eine Anzeige 32 der Abbruchmeldung ausgegeben. Anschließend erfolgt eine Verbindungstrennung 34, woraufhin auch hier das Ende 36 des Verfahrens erreicht wird.

Fällt die Gültigkeitsprüfung 26 jedoch positiv aus, folgt das Verfahren einem Pfad 38 und es wird eine Erkennung oder Identifizierung des Kraftfahrzeugs in dem empfangenen Video oder Videosignal durchgeführt beziehungsweise versucht. An dieser Stelle findet auch eine Plausibilitätsprüfung 40 des Fernsteuerbefehls statt. Wird das Kraftfahrzeug nicht erkannt und/oder der Fernsteuerbefehl als unplausibel bewertet, so folgt das Verfahren einem Pfad 42, welcher ebenfalls zu dem Manöverabbruch 30 und über die bereits beschriebenen Schritte zu dem Ende 36 des Verfahrens führt. Wird das Fahrzeug jedoch erkannt und der Fernsteuerbefehl als plausibel bewertet, erfolgt anschließend eine Freigabeerteilung 46 und der Fernsteuerbefehl wird durch das Kraftfahrzeug ausgeführt.

Die Gültigkeitsprüfung 26, eine Abfrage, ob das Fahrzeug erkannt wurde, die Plausibilitätsprüfung 40 und die Freigabeerteilung 46 können durch eine elektronische Prüfeinrichtung des Kraftfahrzeugs durchgeführt werden. Ebenso können einzelne Teile oder Vorgänge jedoch auch durch andere Geräte oder Komponenten des Kraftfahrzeugs durchgeführt oder übernommen werden.

Während der Ausführung des Fernsteuerbefehls findet kontinuierlich eine Empfangsabfrage 48 statt, mittels welcher ein Empfang weiterer Daten oder Signale, insbesondere des Videosignals, überprüft und erfasst wird. Werden keine weiteren Daten empfangen, so kann offensichtlich auch keine erfolgreiche Erkennung des Kraftfahrzeugs mehr stattfinden, sodass einem Pfad 50 folgend der Manöverabbruch 30 erfolgt. Werden aber weitere Daten empfangen, so wird das Verfahren einem Pfad 52 folgend mit der Gültigkeitsprüfung 26 der neuen empfangenen Daten fortgesetzt. Solange das Kraftfahrzeug mit der Kamera des mobilen Steuergeräts erfasst bleibt und alle Gültigkeitsprüfungen 26 und alle Plausibilitätsprüfungen 40 erfolgreich sind oder positiv ausfallen, gilt ein Wunsch der Bedienperson als erteilt und die Fernsteuerung bzw. die Ausführung des Fernsteuerbefehls oder auch weiterer Fernsteuerbefehle wird kontinuierlich fortgesetzt.

## Patentansprüche

1. Verfahren (10) zum Fernsteuern zumindest einer Funktion eines Kraftfahrzeugs mittels eines mobilen Steuergeräts, bei dem mittels des mobilen Steuergeräts ein Fernsteuerbefehl an das Kraftfahrzeug gesendet (22) und der Fernsteuerbefehl von dem Kraftfahrzeug ausgeführt wird, wenn eine Freigabe erteilt wurde (46), wobei mittels einer optischen Erfassungseinrichtung des mobilen Steuergeräts ein Bild des Kraftfahrzeugs erfasst wird,
**dadurch gekennzeichnet,**
**dass** das von der optischen Erfassungseinrichtung des mobilen Steuergeräts erfasste Bild an das Kraftfahrzeug übermittelt wird (24) und die Freigabe dann von einer Prüfeinrichtung des Kraftfahrzeugs erteilt wird (46), wenn das Kraftfahrzeug von der Prüfeinrichtung in dem übermittelten Bild identifiziert wurde (40),
und **dass** das von der optischen Erfassungseinrichtung des mobilen Steuergeräts erfasste Bild oder ein entsprechendes Video des Kraftfahrzeugs mittels einer Anzeigeeinrichtung des mobilen Steuergerät dargestellt und in dieser Darstellung angezeigt wird, ob das Kraftfahrzeug durch die Prüfeinrichtung erfolgreich identifiziert wurde (40).

2. Verfahren (10) nach Anspruch 1,
**dadurch gekennzeichnet, dass**
- ein Video des Kraftfahrzeugs mittels der optischen Erfassungseinrichtung des mobilen Steuergeräts aufgenommen wird,
- das Video an das Kraftfahrzeug übermittelt wird (24), und
- die Freigabe kontinuierlich erteilt wird (46), solange das Kraftfahrzeug in dem Video kontinuierlich von der Prüfeinrichtung identifiziert wird (40).

3. Verfahren (10) nach einem der vorhergehenden Ansprüche,
**dadurch gekennzeichnet, dass**
von der Prüfeinrichtung eine Plausibilitätsprüfung (40) des Fernsteuerbefehls durchgeführt und die Freigabe nur dann erteilt wird (46), wenn der Fernsteuerbefehl als plausibel bewertet wurde (44).

4. Verfahren (10) nach einem der vorhergehenden Ansprüche,
**dadurch gekennzeichnet, dass**
durch das Kraftfahrzeug die Ausführung des Fernsteuerbefehls abgebrochen (30) und das Kraftfahrzeug in einen gegen unbeabsichtigte Bewegungen des Kraftfahrzeugs gesicherten Zustand versetzt wird, wenn ein Kommunikationsproblem zwischen dem mobilen Steuergerät und dem Kraftfahrzeug erkannt wird (18, 28).

5. Verfahren (10) nach einem der vorhergehenden Ansprüche,
**dadurch gekennzeichnet, dass**
von dem mobilen Steuergerät eine Plausibilitätsprüfung des Fernsteuerbefehls durchgeführt, ein Ergebnis dieser Plausibilitätsprüfung an das Kraftfahrzeug gesendet und die Freigabe nur dann erteilt wird (46), wenn der Fernsteuerbefehl von dem mobilen Steuergerät als plausibel bewertet wurde.

6. Fernsteuersystem, umfassend ein Kraftfahrzeug und ein mobiles Steuergerät, **dadurch gekennzeichnet, dass**
das Fernsteuersystem zum Durchführen eines Verfahrens (10) gemäß einem der vorhergehenden Ansprüche eingerichtet ist.

## Claims

1. Method (10) for the remote control of a function of a motor vehicle by means of a mobile controller, in which method a remote control command is transmitted (22) to the motor vehicle by means of the mobile controller and the remote control command is executed by the motor vehicle if an enable signal is given (46), wherein an image of the motor vehicle is detected by means of an optical detection device of the mobile controller,
**characterised in that**
the image detected by the optical detection device of the mobile controller is transmitted (24) to the motor vehicle and the enable signal is given (46) by a checking device of the motor vehicle if the motor vehicle has been identified (40) in the transmitted image by the checking device, and **in that** the image detected by the optical detection device of the mobile controller or a corresponding video of the motor vehicle is displayed by means of a display device of the mobile controller and the said display indicates whether the motor vehicle has been successfully identified (40) by the testing device.

2. Method (10) according to claim 1,
**characterised in that**
- a video of the motor vehicle is recorded by means of the optical detection device of the mobile controller,
- the video is transmitted to the motor vehicle (24), and
- the enable signal is given continuously (46) as long as the motor vehicle is identified continuously (40) in the video by the checking device.

3. Method (10) according to any of the preceding claims, **characterised in that**
a plausibility check (40) of the remote control command is performed by the checking device and the enable signal is given (46) only if the remote control command has been assessed to be plausible (44).

4. Method (10) according to any of the preceding claims,
**characterised in that**
the execution of the remote control command is aborted (30) by the motor vehicle and the motor vehicle is transferred into a state in which it is secured against inadvertent movements if a communications problem is detected between the mobile controller and the motor vehicle (18, 28).

5. Method (10) according to any of the preceding claims,
**characterised in that**
a plausibility check of the remote control command is performed by the mobile controller, a result of the plausibility check is transmitted to the motor vehicle and the enable signal is given only (46) if the remote control command has been assessed to be plausible by the mobile controller.

6. Remote control system comprising a motor vehicle and a mobile controller,
**characterised in that**
the remote control system is arranged to perform a method (10) according to any of the preceding claims.

## Revendications

1. Procédé (10) de commande à distance d'au moins une fonction d'un véhicule à moteur au moyen d'un dispositif de commande mobile, selon lequel au moyen du dispositif de commande mobile est envoyée (22) une instruction de commande à distance au véhicule à moteur et l'instruction de commande à distance est exécutée par le véhicule à moteur, lorsqu'une autorisation a été accordée (46), un dispositif de détection optique du dispositif de commande mobile permettant de détecter une image du véhicule à moteur, **caractérisé en ce que** l'image détectée par le dispositif de détection optique du dispositif de commande mobile est transmise (24) au véhicule à moteur et l'autorisation est alors accordée par un dispositif de contrôle du véhicule à moteur (46) lorsque le véhicule à moteur a été identifié (40) dans l'image transmise par le dispositif de contrôle, et **en ce que** l'image détectée ou une vidéo correspondante du véhicule à moteur est représentée au moyen d'un dispositif d'affichage du dispositif de commande mobile et affichée dans cette représentation si le véhicule à moteur a été identifié (40) avec succès par le dispositif de contrôle.

2. Procédé (10) selon la revendication 1, **caractérisé en ce qu'**
- une vidéo du véhicule à moteur a été enregistrée au moyen du dispositif de détection optique du dispositif de commande mobile,
- la vidéo a été transmise (24) au véhicule à moteur, et
- l'autorisation a été accordée (46) en continu, aussi longtemps que le véhicule à moteur est identifié dans la vidéo en continu par le dispositif de contrôle (40).

3. Procédé (10) selon l'une quelconque des revendications précédentes, **caractérisé en ce qu'**un contrôle de plausibilité (40) de l'instruction de commande à distance est exécutée par le dispositif de contrôle et l'autorisation est accordée (46) que lorsque l'instruction de commande à distance a été évaluée comme plausible (44).

4. Procédé (10) selon l'une quelconque des revendications précédentes, **caractérisé en ce que** l'exécution de l'instruction de commande à distance est interrompue (30) par le véhicule à moteur et le véhicule à moteur est placé dans un état sécurisé contre tous mouvements involontaires de ce dernier, lorsqu'un problème de communication est détecté (18, 28) entre le dispositif de commande mobile et le véhicule à moteur.

5. Procédé (10) selon l'une quelconque des revendications précédentes, **caractérisé en ce qu'**un contrôle de plausibilité de l'instruction de commande à distance est exécuté par le dispositif de commande à distance, un résultat dudit contrôle de plausibilité est envoyé au véhicule à moteur et l'autorisation est ensuite accordée (46) que lorsque l'instruction de commande à distance a été évaluée par le dispositif de commande mobile comme plausible.

6. Système de commande à distance, comprenant un véhicule à moteur et un dispositif de commande mobile **caractérisé en ce que** le système de commande à distance est conçu pour exécuter un procédé (10) selon l'une quelconque des revendications précédentes.
